# EUROPEAN PATENT APPLICATION

(11) **EP 1 164 404 A1**
(43) Date of publication of application: **19.12.2001**
(21) Application number: 00401677.0
(22) Date of filing: 14.06.2000
(51) Int. Cl.: G02B 26/02

(54) **An optical switch having an impact printer head actuator**

(71) Applicant: Corning Incorporated, Corning, New York 14831 (US)
(72) Inventor: Dahmani, Brahim, Corning Incorporated, Corning, NY 14831 (US); Renvaze, Christophe Fancois Pierre, Corning, NY 14831 (US)
(74) Representative: Boon, Graham Anthony

(57) **Abstract**

The present invention provides an N x M non-blocking optical switch (10) using a novel switching fabric that utilizes micromirrors (24) to switch light signals in a planar waveguide array. The optical switch (10) uses a commercially available micromechanical actuator (30) to actuate each micromirror (24). The actuator (30) can also be an inexpensive custom made actuator. The actuator (30) and the waveguide substrate (40) are separate units and there are no electrical connections between them. The switch (10) includes a unique design feature whereby the actuator (30) and the micromirror (24) array do not require precision alignment. The optical switch (10) of the present invention is fabricated at low temperatures and assembled using glue (16).

## Description

### Background of the Invention

### 1. Field of the Invention

The present invention relates generally to optical switches, and particularly to optical switches using micromechanical actuators.

### 2. Technical Background

Currently, network providers are experiencing a large increase in the demand for telecommunications services. Forecasters do not expect that this increase in demand will abate anytime soon. Network designers are attempting to meet the demand by exploiting the multi-terabit bandwidth capacity of single-mode optical fibers in the 1550nm wavelength region. Early on in the fiber optics era, the networks that were deployed used the optical layer as a transmission medium in point-to-point links. Most of the network functionality took place in the electrical domain. Unfortunately, this approach is very limited. Subsequently, SONET/SDH systems were developed as an all purpose method of carrying voice and data over fiber. However, SONET/SDH systems are also limited by the electronic switching equipment. Typically, the SONET/SDH equipment deployed at access rings operate at the OC-3 or OC- 12 transmission rates, which translate to data rates of 155 Mb/s and 622 Mb/s respectively. Interoffice rings usually operate at OC- 12, OC-48, or OC- 192 transmission rates. The data rates for OC48 and OC- 192 are about 2.5Gb/s and 10Gb/s respectively. Thus, it would be advantageous to move network functionality such as routing and switching into the optical domain to exploit the full bandwidth capacity of single mode fiber.

There have been several approaches that have been proposed to realize this goal. One such approach uses a switch array with movable micro-electro-mechanical system (MEMS) mirrors. The input and output optical fibers are set in grooves and are disposed orthogonal to each other. The MEMS mirrors are positioned at the intersection of the input fibers and the output fibers in free space. This method requires fairly large mirrors and collimators. This is due to the inevitable spreading of the light beam as it leaves the waveguide and travels in free-space toward the MEMS mirror. The large mirrors are problematic because of their requirements for angular placement accuracy, flatness, and the difficulty of actuating such a relatively large structure quickly and accurately. These devices typically have an actuation distance of 300µm to 400µm, which negatively impacts switching speed. In addition, the individual collimators must be assembled for each input and output fiber, thus increasing fabrication costs.

In a second approach, a planar waveguide array is used. Trenches are formed at the cross-points of the input waveguides and the output waveguides. Micromirrors are positioned within the trenches in free-space. Each micromirror acts like a shutter and is rotated into a closed position by an electrostatic, magnetic, or some other type of MEMS actuator so that the light signal is reflected from an input waveguide into an output waveguide. When the micromirror is in the open position, the light continues to propagate in the original direction without being switched. This method is also subject to the beam-spreading problem, and it appears that the typical losses from such a switch would be high.

A third approach uses an index-matching fluid as the switching element. A planar waveguide array is formed on a substrate. Trenches are formed at the cross-points and are filled with a fluid that matches the refractive index of the waveguide core. In order to actuate the switch, the fluid is either physically moved in and out of the cross-point using an actuator, or the fluid is thermally or electrolytically converted into a gas to create a bubble. For this approach to work, the facets cut at the end of the waveguide at the cross-points must be of mirror quality, since they are used to reflect the light into the desired waveguide. Finally, the fluid must be withdrawn cleanly to preserve the desired facet geometry and to prevent scattering losses due to any remaining droplets.

In yet another approach, a beam or plate is disposed diagonally over a gap in a waveguide. A mirror is suspended from the beam into the gap. An electrode is disposed adjacent to the gap and underneath the beam. When the electrode is addressed, the beam and mirror move into the gap to reflect light propagating in the waveguide. This approach has several disadvantages. This method is also subject to the beam-spreading problem discussed above. Again, it appears that the typical losses from such a switch would be high. Second, the electronics needed to drive the actuator are integrated into the optical substrate.

All of the approaches discussed above are problematic when considering cost and reproducibility. MEMS mirrors and actuators must be specially made using one of several photolithographic processes. Assembling MEMS mirrors and MEMS actuators in waveguide trenches requires precision alignment. The assembly of MEMS devices often requires high temperatures. Integrating electronics into waveguide/MEMS substrates adds another layer of complexity to the process. Thus, the resultant switch may be expensive to make and difficult to reproduce. These devices may have yield problems as well.

Thus, a need exists for an optical switch having the advantages of the MEMS design, without the disadvantages of the designs discussed above. A need exists for an optical switch that uses readily available off-the-shelf actuators, or ones that can be sub-contracted to standard low cost machine shops. The switch should be comprised of discrete low cost units that avoid unneeded complexity such as integrating electronics into the optical waveguide substrate. Electrical connections between the substrate and electronic systems should likewise be eliminated. Further, a switch is needed that mitigates the precision alignment heretofore required between the actuator and the micromirror array. Finally, an optical switch is needed that can be fabricated at low temperatures using low cost assembly techniques.

### Summary of the Invention

The present invention provides an optical switch having the advantages of the MEMS design, without the disadvantages of the designs discussed above. The optical switch uses a commercially available actuator, or alternatively, a custom made actuator that is easily and inexpensively made by a standard low cost machining shop. The actuator and the waveguide substrate are separate units. Thus, there is no need to integrate electronics into the optical waveguide substrate. Furthermore, the substrate has no electrical connections. Because of the unique design of the switch, the interface between the actuator and the micromirror array does not require precision alignment. The optical switch of the present invention is fabricated at low temperatures and assembled using glue.

One aspect of the present invention is an optical device for directing a light signal. The optical device includes a switching membrane having a undeformed first state and a deformed second state, wherein the light signal is not deflected in the first state and the light signal is deflected in the second state.

In another aspect, the present invention includes an optical device for directing a light signal. The optical device includes a membrane having a first side and a second side, the membrane being actuatable between an undeformed state and a deformed state. At least one micromirror is connected to the second side, wherein the micromirror deflects the light signal in the deformed state.

In another aspect, the present invention includes an optical device for directing a light signal. The optical device includes at least one optical waveguide for propagating the light signal, the at least one optical waveguide having at least one trench disposed therein. A switching membrane having at least one micromirror is aligned with the at least one trench, the membrane being actuatable between an undeformed state and a deformed state.

In yet another aspect, the present invention includes an optical switch for directing a plurality of light signals. The optical switch includes an optical circuit for propagating the plurality of light signals, the optical circuit having a plurality of first waveguides intersecting a plurality of second waveguides to thereby form a plurality of cross-points, wherein each cross-point includes a trench. A switch membrane including a first side and a second side, the second side having a plurality of micromirrors is disposed thereon, each of the plurality of micromirrors being in substantial alignment with a corresponding trench. A micromechanical actuator having a plurality of actuating members engages the first side, each actuating member being in substantial alignment with a corresponding micromirror disposed on the second side, whereby the actuating member deforms the switch membrane in a first switch state to thereby position the corresponding micromirror into its corresponding trench.

In yet another aspect, the present invention includes a method of making an optical device for directing a light signal. The method including the steps of providing a substrate having a first surface and a second surface. At least one mirror is formed in the second surface of the substrate. Excess substrate material is removed from the second surface on either side of the at least one mirror such that the substrate is deformable between a undeformed position and a deformed position.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operation of the invention.

### Brief Description of the Drawings

Figure 1 is a sectional view of the optical switch of the present invention;
Figure 2 is a plan view of the optical waveguide substrate of the present invention;
Figure 3 is a schematic view of the actuator drive mechanism in accordance with a first embodiment of the present invention;
Figure 4 is a detail view of the actuator impact print head of the actuator shown in Figure 3;
Figure 5 is a schematic view of the actuator drive mechanism in accordance with a second embodiment of the present invention
Figure 6 is a schematic view of the switch membrane in accordance with a third embodiment of the present invention
Figure 7 is a sectional view of the optical switch using the switch membrane shown in Figure 6;
Figures 8A - 8F are diagrams depicting a method for fabricating the switch membranes shown in Figures 1-6;
Figure 9 is a plan view of the switch membrane in accordance with a fourth embodiment of the present invention; and
Figures 10A - 10F are diagrams depicting a method for fabricating the switch membrane shown in Figure 9.

### Detailed Description of the Invention

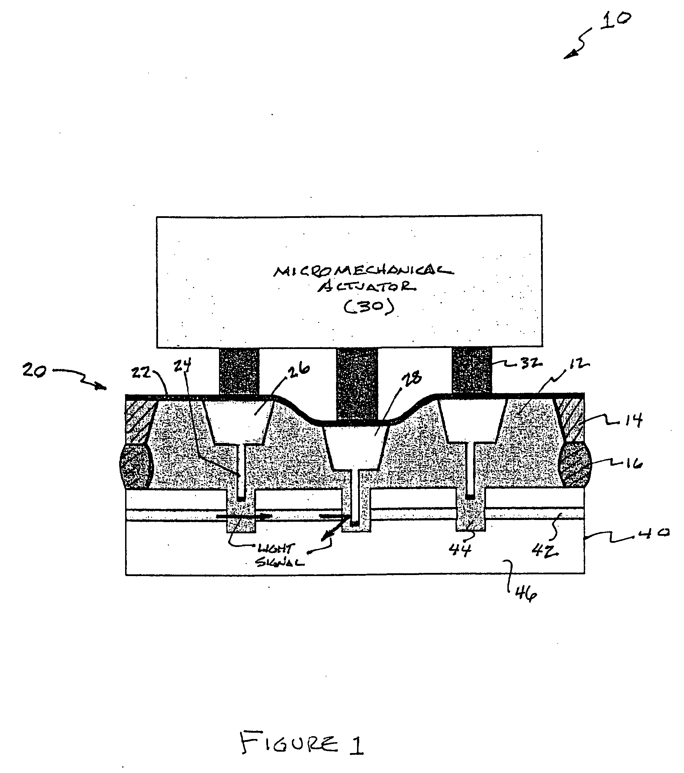

Reference will now be made in detail to the present preferred embodiments of the invention, examples of which are illustrated in the accompanying drawings. Wherever possible, the same reference numbers will be used throughout the drawings to refer to the same or like parts. An exemplary embodiment of the optical switch of the present invention is shown in Figure 1, and is designated generally throughout by reference numeral 10.

In accordance with the invention, the present invention for an optical switch includes a switching membrane having a undeformed first state and a deformed second state. The switching membrane deflects the light signal in the second state, but does not deflect the light signal in the first state. The switching membrane is actuated by a micromechanical actuator that is readily available. It can be implemented using an off the-shelf commercial unit or custom made in a standard machining shop. The membrane, actuator and waveguide substrate are separate units. There is no need to integrate electronics into the optical waveguide substrate and the substrate has no electrical connections. The actuator does not have to be precisely aligned to the waveguide substrate and the switching membrane. The optical switch of the present invention is fabricated at low temperatures and easily assembled, using glue to join the separate units.

As embodied herein, and depicted in Figure 1, a sectional view of the optical switch of the present invention is disclosed. Optical switch 10 includes switching membrane 20 which has micromirror 24 disposed on flexible diaphragm 22. Micromirror 24 may also include stop member 26. Stop member 26 is wider than trench 44 and prevents micromirror 24 from being damaged by being driven into optical substrate 40. Switching membrane 20 is connected to optical substrate 40 by a spacer or framing member 14 using assembly glue 16. Optical substrate 40 includes optical waveguides 42 which propagate the light signals in the optical circuit. Trenches 44 are formed in waveguides 42. As shown in Figure 1, micromirrors 24 are in alignment with trenches 42. Although actuator 30 does not have to be aligned to membrane 20 or waveguide substrate 40, membrane 20 and mirrors 24 do have to be aligned to trenches 44. There is +/- 1µm alignment variability between mirror 24 and trench 44. Switch 10 also includes micromechanical actuator 30. Actuator 30 includes a plurality of impact pins 32 which are engaged with flexible diaphragm 22. In one embodiment impact pins 32 are touching, or slightly spaced apart from diaphragm 22. In another embodiment, impact pins 32 are connected to flexible diaphragm 22. It is not necessary to precisely align pins 32 with the centerline of stop member 26. Even if the pins are off-center, they will position mirrors 24 in trenches 44 when they deform diaphragm 22. Actuator 30 individually controls impact pins 32. Any micromirror 24 can be positioned within its corresponding trench 44 independently of the other micromirrors. In one embodiment, index-matching fluid 12 is disposed between switching membrane 20 and optical substrate 40. Index-matching fluid 12 prevents the light signal from spreading and de-collimating as it traverses trench 44. The refractive index of index-matching fluid 12 is substantially the same as that of waveguides 42.

It will be apparent to those of ordinary skill in the pertinent art that modifications and variations can be made to flexible diaphragm 22 of the present invention depending on the type of actuator 30 used, the degree of flexibility and strength required, and/or the need to contain index-matching fluid 12 between substrate 40 and membrane 20. In the example shown in Figure 1, flexible diaphragm 22 is comprised of a metallic material. In one embodiment the metallic material is an aluminum foil. In other embodiments, membrane 20 is fabricated by forming an uninterrupted diaphragm or foil using an electro-deposition of nickel, copper, gold, polymer, or a thermal oxide material. In the electro-deposition process, an adhesion under layer may be used, such as silicon. In another embodiment, membrane 20 is fabricated by forming a matrix of beams connecting each base 26 and mirror 24 pair with frame 14. In yet another embodiment, membrane 20 is a micro-suspension or a micro-spring structure. This embodiment will be discussed more fully below.

It will also be apparent to those of ordinary skill in the pertinent art that modifications and variations can be made to micromechanical actuator 30 depending on the availability and pricing of suitable commercial actuators. For example, actuator 30 may be comprised of an impact print head, a screw driven linear motor actuator, or a pin matrix device used in Braille displays.

Those of ordinary skill in the art will also recognize that modifications and variations can be made to optical substrate 40 as well. Cladding layer 46 can be formed using any of the methods and materials commonly known to those of ordinary skill in the art. Semiconductor materials such as silicon can be used. Chemical vapor deposition of silica, fused silica, ceramic materials, metallic materials, or polymeric materials can also be used. A variety of methods and materials can be used to form waveguides 42. These methods include: sol-gel deposition of silica; amorphous silicon; compound semiconductor materials such as III-V or II-VI materials; doped chemical vapor deposition of silica; organic -inorganic hybrid materials; or polymer materials. In one embodiment, waveguides 42 are formed using photolithographic techniques wherein cladding layer 46 is selectively exposed to radiation using a mask or reticle.

Excess material is removed, and waveguide material is deposited in a groove etched in the cladding material to form the waveguides 42. Other techniques such as embossing and micro replication can also be used.

The optical switch 10 shown in Figure I operates as follows. The light signal propagates through trench 44 without being deflected when switching membrane 20 is not deformed by impact pin 32. Micromirror 24 is positioned in trench 44 to deflect the light signal when actuator 30 causes impact pin 32 to deform switching membrane 20. When impact pin 32 is retracted, switching membrane springs back to its original position by an intrinsic restoring force and/or the force produced by index-matching fluid 12.

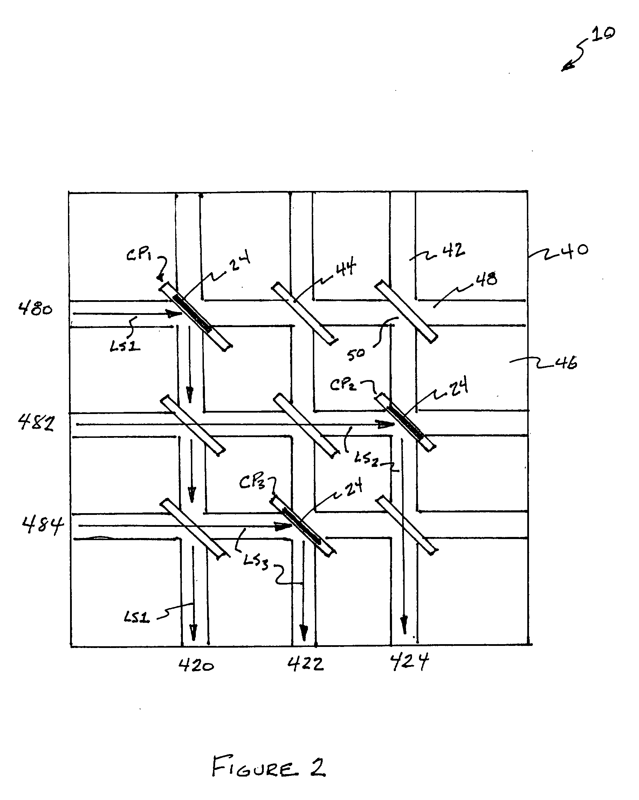

As embodied herein, and depicted in Figure 2, a plan view of optical switch 10 is depicted showing the placement of micromirrors 24 in optical substrate 40 during switch actuation. Optical substrate 40 includes waveguides 42 intersecting waveguides 48. Cladding 46 is disposed between waveguides 42 and 48. In Figure 2, switching membrane 20 and actuator 30 are not shown for clarity of illustration. Instead, only those micromirrors 24 that are positioned within their respective trenches 44 are shown. Light signals Lₛ₁, Lₛ₂, and Lₛ₃ are directed into ports 480, 4802, and 484, respectively. Light signal Lₛ₁ is deflected by mirror 24 at cross-point C_{P1} and is directed out of switch 10 via port 420. Light signal Lₛ₂ is deflected by mirror 24 at cross-point C_{P2} and is directed out of switch 10 via port 424. Light signal Lₛ₃ is deflected by mirror 24 at cross-point C_{P3} and is directed out of switch 10 via port 422.

As one of ordinary skill in the art will recognize, a variety of combinations can be utilized to direct light signals Lₛ₁, Lₛ₂, and Lₛ₃ through optical switch 10. Further, the present invention is not limited to the 3 x 3 example shown in Figure 2. Micromechanical actuator 30, switching membrane 20 with micromirrors 24, and optical substrate 40 with intersecting waveguides 42 and 48, form an N x M nonblocking cross-bar switch, wherein N is the number of waveguides 42, M is the number of waveguides 48, and N x M is the number of micromirrors 24 disposed on switching membrane 20. N and M are integers.

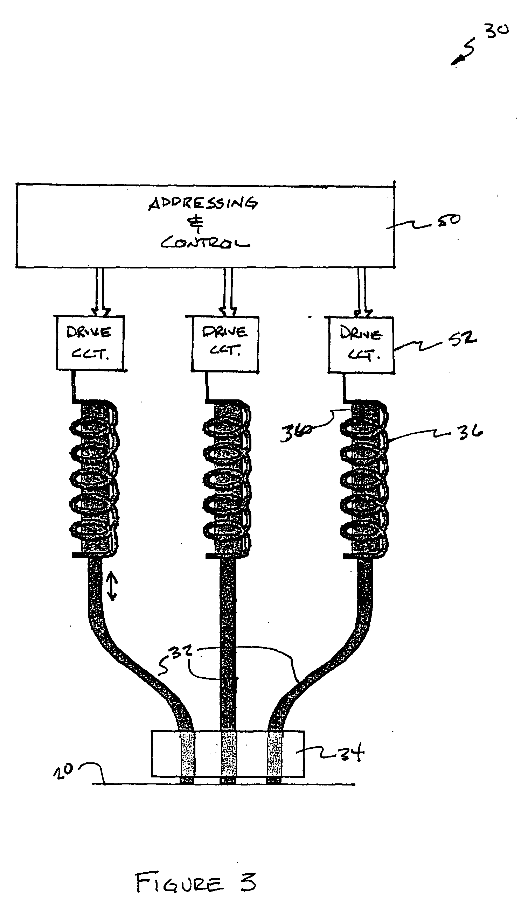

As embodied herein, and depicted in Figure 3, a schematic view of micromechanical actuator 30 in accordance with a first embodiment of the present invention is disclosed. Actuator 30 includes an array of impact pins 32. Pins 32 are an integrated part of print head 34. Each impact pins 32 is connected to a coil actuator 36. Coil actuators 36 are driven by their respective drive circuits 52. Drive circuits 52 are activated and addressed by control module 50. In response to a control pulse from control module 50, drive circuit 52 supplies solenoid 36 with current. As the current flows through solenoid 36, the armature (not shown) of solenoid 36 is attracted to the core 360 of the solenoid, driving impact pin 32 to deform switching membrane 20. The actuator and print head arrangement shown in Figure 3 is capable of a switching speed of approximately 10ms or better.

It will be apparent to those of ordinary skill in the pertinent art that modifications and variations can be made to control module 50 and drive circuit 52 of the present invention depending on the nature of the command signals being transmitted and received from the network interface, and the current requirements of solenoid coil 36. For example, control module 50 may send an active high digital pulse to drive circuit 52, signaling that its respective micromirror should be positioned within trench 44. In one embodiment, drive circuit 52 includes an emitter grounded transistor to drive solenoid 36. The coil of solenoid actuator 36 is connected (not shown) to a power source at one end, and the collector of an emitter-grounded transistor at the other. Drive circuit 52 drives the base of the transistor causing a current to flow through solenoid 36 from the power source. As discussed above, the current flows through the coil, the armature (not shown) of the solenoid 36 is attracted to the core of the solenoid causing impact pin 32 to deform membrane 20. As one of ordinary skill in the art will recognize any number of circuits can be designed to supply current to solenoid 36 depending on the electrical characteristics of solenoid 36.

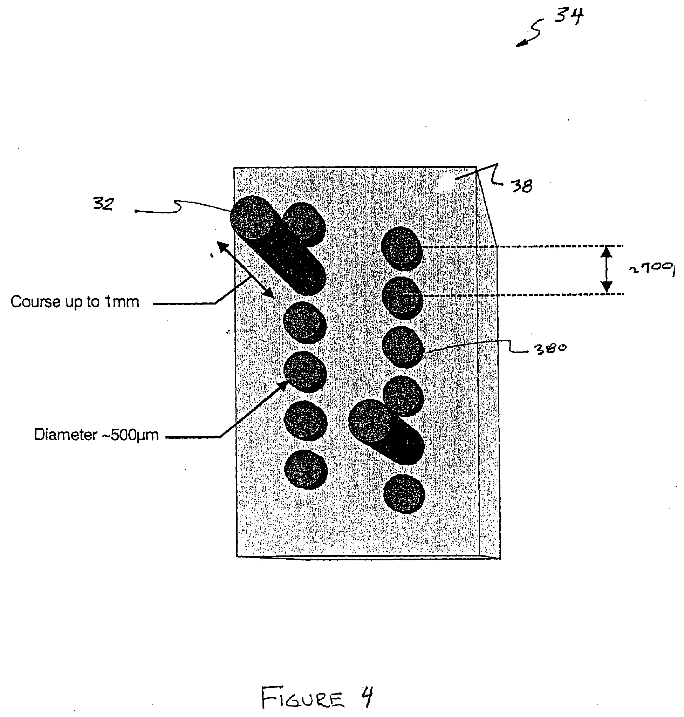

As embodied herein, and depicted in Figure 4, a detail view of the actuator impact print head 34 is disclosed. Print head 34 includes plate 38 and impact pins 32. In one embodiment, plate 38 is made of a Teflon material. One of ordinary skill will recognize that any suitable material will do. Plate 38 includes an array of holes 380 to accommodate impact pins 32.

It will be apparent to those of ordinary skill in the pertinent art that modifications and variations can be made to the size and pitch of holes 380 and pins 32 disposed on plate 38. Obviously, the dimensions and tolerances of the features disposed on plate 38 depend on the size and pitch of trenches 44 disposed in optical substrate 40. By way of example, the pitch of holes 380 (and pins 32) shown in Figure 4 is about 700µm. Each pin 32 can be extended approximately I mm when deforming membrane 20 (not shown). The diameter of the impact pins 32 is about 500µm. However, the present invention is not limited to the pitch and pin sizes disclosed in this example. These dimensions can be adjusted to accommodate smaller or larger switch matrices.

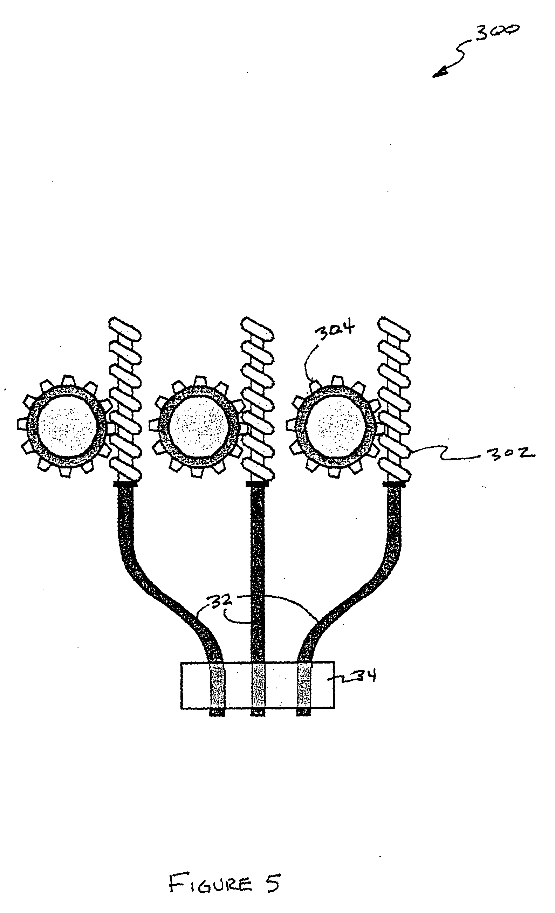

In a second embodiment of the invention, as embodied herein and as shown in Figure 5, a schematic view of an alternate actuator drive mechanism is disclosed. Actuator 300 includes an array of impact pins 32. Pins 32 are an integrated part of print head 34. The same print head used in the first embodiment discussed above can be used in the second embodiment. Each impact pin 32 is connected to linear screw drive unit 302. Linear screw drive unit 302 is operatively coupled to step motor 304 (only an interfacing screw of the motor is shown). Motors 304 are addressed and driven by control module 50 (not shown for clarity of illustration). Again, it will be apparent to those of ordinary skill in the pertinent art that modifications and variations can be made to control module 50 of the present invention depending on the nature of the command signals being transmitted and received from the network interface, and the drive requirements of motor 304.

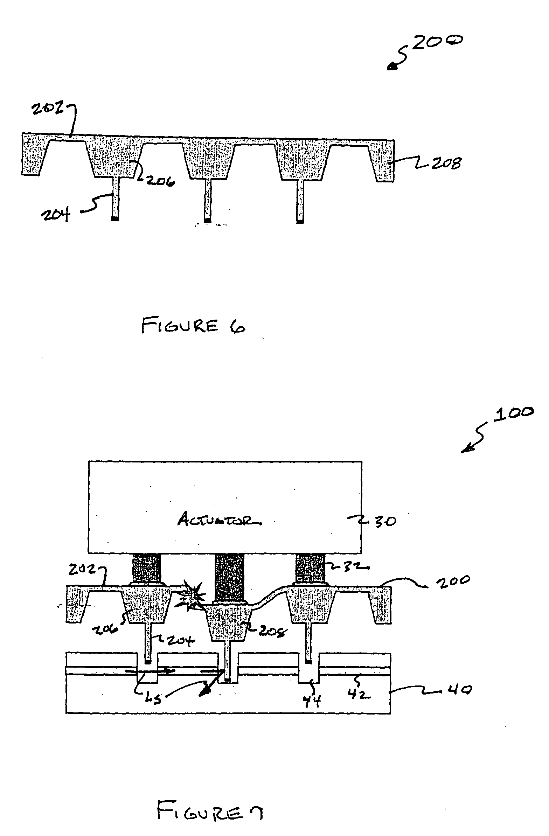

In a third embodiment of the invention, as embodied herein and as shown in Figure 6, a schematic view of alternate switch membrane 200 is disclosed. Switching membrane 200 is made by partially etching substrate 208. Membrane 200 includes plate member 202, stop member 206, and micromirror 204. Figure 7 is a sectional view of the optical switch using the switching membrane shown in Figure 6. The descriptions of actuator 30 and optical substrate 40 are identical to the descriptions of those elements described above and will not be repeated. As shown in Figure 7, pin 32 may break membrane 200 during switch actuation. This will not pose a problem because pins 32 are glued to plate 202. However, in this design a two-way actuator such as the screw driven linear motor discussed above may be more appropriate because the spring effect inherent in the first embodiment may not return micromirror 24 to a retracted position quickly enough.

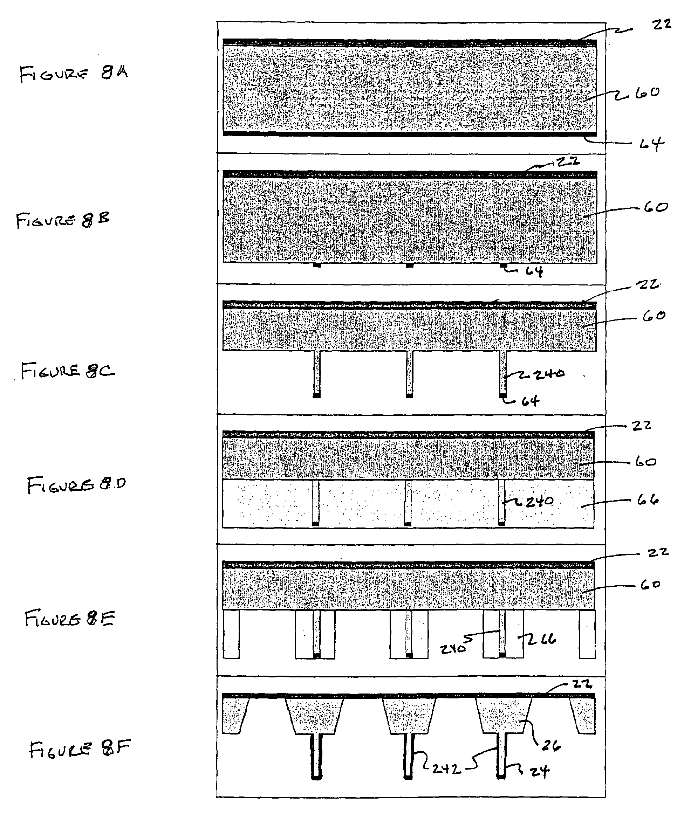

As embodied herein, and depicted in Figures 8A - 8F, diagrams depicting a method for fabricating the switch membrane shown in Figure I are disclosed. In Figure 8A, <110> silicon wafer 60 is provided. In another embodiment, wafer 60 is a <110> SOI wafer. Metallic coating 22 is deposited on a first surface of silicon wafer 60. Metallic coating 22 can be of any suitable material, but there is shown by way of example an aluminum coating. As discussed above, the metal can be nickel, copper, or gold. Non-metallic materials such as silica or polymers may also be used. Masking material 64 such as silicon nitride is then deposited on a second surface of silicon wafer 60. In Figure 813, mask 64 is patterned and etched using a photolithographic process. In Figure 8C, mirror structures 240 are formed in the second surface by anisotropic wet etching. Photoresist coating 66 is applied to the second surface in Figure 8D. In Figure 8E, photoresist lithography is performed leaving a portion of the photoresist 66 on either side of mirror structures 240. In Figure 8F, wet etching is performed on the exposed portions of the second surface. All of the silicon is removed to expose flexible diaphragm 22. The photoresist is likewise removed, exposing stop member 26. Finally, mirror structures 240 are coated with gold layer 242 to form mirrors 24.

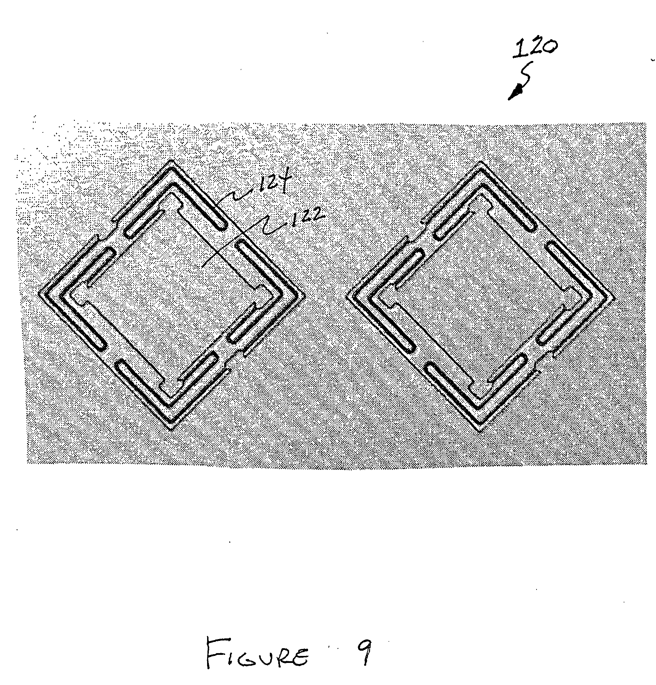

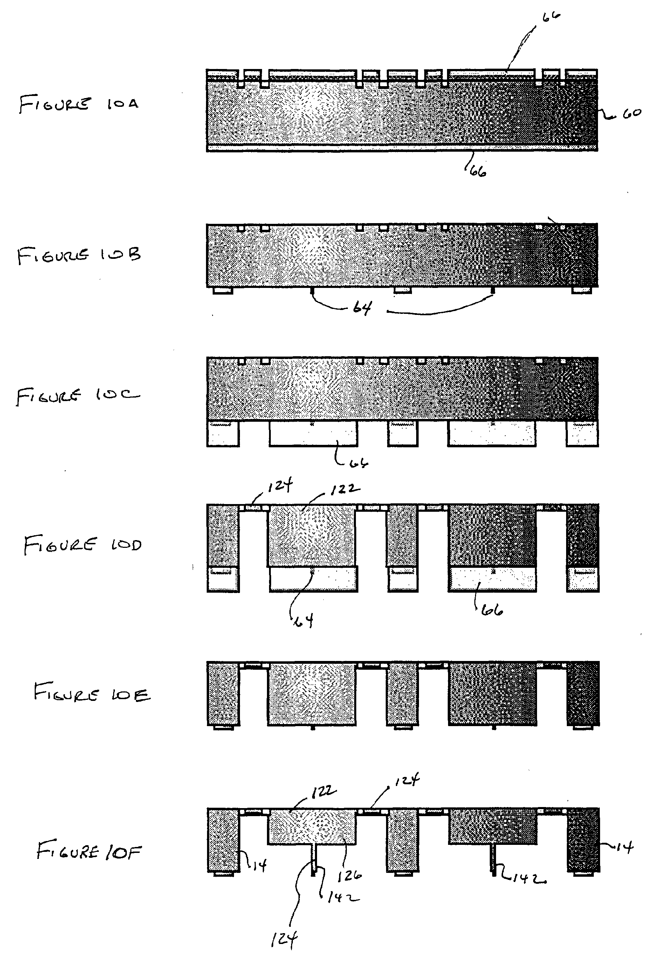

As embodied herein, and depicted in Figure 9, a plan view of the switch membrane in accordance with a fourth embodiment of the present invention is disclosed. In Figure 9, the portion of the membrane 120 exposed to actuator 30 is shown. This embodiment discloses a micro-spring, or a micro-suspension version of membrane 120. Membrane 120 includes platform 122 which has stop member 26 and mirror 24 (see Figures 10A-10F) formed integrally thereon. Platform 122 is connected to membrane 120 by spring member 124 and is suspended over substrate 40 (not shown). Thus, when pins 32 of actuator 30 depress platform 122, flexible spring member 124 is elongated and mirror 24 is inserted into trench 44 to thereby reflect the light signal.

As embodied herein and depicted in Figures 10A ― 10F, diagrams depicting a method for fabricating the switch membrane shown in Figure 9 are disclosed. In Figure 10A, <110> silicon wafer 60 is provided. Alternatively, wafer 60 can be a <110> SOI wafer. A layer of photoresist 66 is disposed on both sides of wafer 60. In Figure 10B, the top surface of wafer 60 is patterned and etched using an RIE etching process to partially form spring member 124. The underside is also patterned and etched and a silicon nitride mirror mask 64 is form on the underside of wafer 60. In Figure 10C, a portion of the underside is covered by photoresist layer 66. Another portion directly underneath spring member 124 is not covered by material 66. This portion is etched to completely form spring member 124. In Figures 10E and 10F, mirror 24 and stop member 126 are integrally formed from platform 122. Subsequently, mirrors 24 are coated with reflective gold coating 142. One advantage to this approach over the method disclosed in Figures 8A ― 8F is that lithographic processing is not done over mirrors 24. This avoids the risk of breaking the mirrors. In another embodiment using a SOI wafer, a silica etch stop is employed for a deep etching through wafer 60.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.

## Claims

1. An optical device for directing a light signal, the optical device comprising:
a switching membrane having a undeformed first state and a deformed second state, wherein the light signal is not deflected in the first state and the light signal is deflected in the second state.

2. The optical device of claim 1, wherein the switching membrane further comprises:
a diaphragm; and
a reflector structure connected to the diaphragm.

3. The optical device of claim 2, wherein the diaphragm comprises a material selected from a group containing silica, polymer, aluminum, gold, nickel, or copper.

4. The optical device of claim 2, wherein the reflector structure comprises a silicon substrate coated with a reflective metallic film.

5. The optical device of claim 1, wherein the switching membrane is a partially etched integrated substrate, the integrated substrate comprising:
a plate member;
a base member connected to and integral with the plate member; and
a reflector member connected to and integral with the base member.

6. The optical device of claim 5, wherein the integrated substrate is comprised of silicon.

7. The optical device of claim 5, wherein the reflector member is comprised of silicon coated with a gold reflective layer.

8. The optical device of claim 1, wherein the integrated substrate comprises:
a matrix of intersecting beam members having a plurality of intersections;
a plurality of reflector structures, each reflector structure being connected a corresponding one of the plurality of intersections.

9. An optical device for directing a light signal, the optical device comprising:
a membrane having a first side and a second side, the membrane being actuatable between an undeformed state and a deformed state; and
at least one micromirror connected to the second side, wherein the micromirror deflects the light signal in the deformed state.

10. The optical device of claim 9, wherein the membrane comprises a material selected from a group containing silica, polymer, aluminum, gold, nickel, or copper.

11. The optical device of claim 9, wherein the at least one micromirror is comprised of a substrate material disposed on the metallic material.

12. The optical device of claim 11, wherein the substrate material is silicon.

13. The optical device of claim 9, wherein the membrane comprises:
a platform member connected to the at least one micromirror; and
a micro-spring member connected to the platform member and the membrane.

14. An optical device for directing a light signal, the optical device comprising:
at least one optical waveguide for propagating the light signal, the at least one optical waveguide having at least one trench disposed therein; and
a switching membrane having at least one micromirror aligned with the at least one trench, the membrane being actuatable between an undeformed state and a deformed state.

15. The optical switch of claim 14, wherein the at least one optical waveguide comprises:
a plurality of input optical waveguides; and a plurality of output optical waveguides that intersect said plurality of input optical waveguides at a plurality of cross-points, wherein the at least one trench includes a plurality of trenches formed at said plurality of cross-points.

16. The optical switch of claim 15, wherein the at least one micromirror includes a plurality of micromirrors disposed in substantial alignment with the plurality of trenches.

17. The optical switch of claim 16, wherein the plurality of micromirrors, the plurality of input waveguides, and the plurality of output waveguides form an N x M nonblocking cross-bar switch, wherein N is the number of input waveguides, M is the number of output wave guides and N x M is the number of micromirrors.

18. The optical device of claim 14, further comprising a micromechanical actuator engaged with the switching membrane, the actuator commutating the membrane between an undeformed state and a deformed state, whereby the at least one micromirror is offset from the at least one trench in the undeformed state, and positioned within the at least one trench in the deformed state to thereby deflect the light signal.

19. The optical device of claim 18, the micromechanical actuator further comprising:
at least one impact pin connected to the switching membrane and in substantial alignment with the at least one micromirror;
at least one armature connected to the at least one impact pin; and
at least one solenoid having a core, the core attracting the armature when a current flows in the solenoid, whereby the at least one impact pin deforms the switching membrane to thereby position the at least one micromirror in the trench.

20. The optical device of claim 18, the micromechanical actuator further comprising:
at least one impact pin connected to the switching membrane and in substantial alignment with the at least one micromirror;
at least one screw drive member connected to the impact pin; and
at least one linear motor connected to the at least one screw drive member, whereby the at least one impact pin is driven to deform the switching membrane to thereby position the at least one micromirror in the trench.

21. The optical device of claim 20, wherein the at least one screw drive member and the at least one linear motor are self-latching devices that remain in position when no power is applied to the motor.

22. The optical device of claim 13, further comprising index-matching fluid disposed between the at least one optical waveguide and the switching membrane, the index-matching fluid having substantially the same refractive index as a core region of at least one optical waveguide.

23. The optical device of claim 13, wherein a height of the at least one micromirror is less than a depth of the at least one trench.

24. The optical device of claim 13, wherein the at least one micromirror includes a stop portion, the stop portion being wider than a width of the at least one trench.

25. An optical switch for directing a plurality of light signals, the optical switch comprising:
an optical circuit for propagating the plurality of light signals, the optical circuit having a plurality of first waveguides intersecting a plurality of second waveguides to thereby form a plurality of cross-points, wherein each cross-point includes a trench;
a switch membrane including a first side and a second side, the second side having a plurality of micromirrors disposed thereon, each of the plurality of micromirrors being in substantial alignment with a corresponding trench;
and a micromechanical actuator having a plurality of actuating members engaging the first side, each actuating member being in substantial alignment with a corresponding micromirror disposed on the second side, whereby the actuating member deforms the switch membrane in a first switch state to thereby position the corresponding micromirror into its corresponding trench.

26. The optical switch of claim 25, wherein the plurality of micromirrors form a two dimensional array of micromirrors.

27. The optical switch of claim 26, further comprising a micromechanical actuator having a two dimensional array of actuators engaging the switching membrane, wherein each actuator is substantially aligned with a corresponding micromirror.

28. The optical switch of claim 25, wherein the at least one trench is a continuous diagonal channel that intersects a plurality of cross-points.

29. The optical switch of claim 25, wherein the at least one trench is a discrete well, formed separately and intersecting a single cross-point.

30. The optical switch of claim 25, wherein the micromechanical actuator is an impact printer head further comprising:
a plurality of impact pins engaging the switch membrane, the plurality of impact pins being in substantial alignment with the plurality of micromirrors;
a plate member positioned proximate the switch membrane, the plate member having a plurality of holes accommodating the plurality of impact pins;
and a coil actuation device having a plurality of coil actuators, each coil actuator being connected to a corresponding impact pin, whereby the corresponding impact pin deforms the switching membrane to thereby position a corresponding micromirror in the corresponding trench.

31. The optical switch of claim 30, further comprising a control circuit coupled to the coil actuation device for individually controlling each impact pin.

32. The optical switch of claim 30, wherein the plurality of impact pins are arranged in a matrix having a pitch of less than 1 mm.

33. The optical switch of claim 32, wherein the pitch is approximately equal to 700µm.

34. The optical switch of claim 30, wherein each impact pin is extendible approximately 1mm.

35. The optical switch of claim 30, wherein the plate member is comprised of a Teflon material.

36. The optical switch of claim 25, wherein the micromechanical actuator has a switching speed of at least approximately 10msec.

37. The optical switch of claim 25, wherein the micromechanical actuator is comprised of a linear screw actuator comprising:
a plurality of impact pins engaging the switch membrane, the plurality of impact pins being in substantial alignment with the plurality of micromirrors;
a plate member positioned proximate the switch membrane, the plate member having a plurality of holes accommodating the plurality of impact pins; and
a linear screw drive unit having a plurality of self-latching screw drive actuators, each actuator being connected to a corresponding impact pin, whereby the corresponding impact pin deforms the switching membrane to thereby position a corresponding micromirror in the corresponding trench.

38. The optical switch of claim 25, wherein the micromechanical actuator is comprised of a pin matrix device.

39. The optical switch of claim 25, wherein the switch membrane further comprises a a metallic sheet having a first surface disposed facing the micromechanical actuator, and a second surface covering the optical circuit; and
a plurality of substrate features disposed on the second surface in substantial alignment with the plurality of cross-points, wherein each micromirror is formed from a portion of a corresponding substrate feature.

40. The optical switch of claim 39, wherein each substrate feature includes a stop member having a width greater than a width of the trench, and a reflector portion integrally formed with and connected to the stop member.

41. The optical device of claim 40, wherein a micromirror is formed by coating the reflector portion with a metallic film.

42. The optical switch of claim 39, wherein the plurality of substrate features are comprised of silicon.

43. The optical device of claim 39, wherein the metallic sheet is comprised of a metal selected from a group containing silica, polymer, aluminum, gold, nickel, or copper.

44. The optical switch of claim 25, wherein the switch membrane further is a partially etched integrated substrate, the integrated substrate comprising:
a plate member; a plurality of stop members integral with the plate member; and a plurality of mirror members integral with the plurality of stop members.

45. The optical switch of claim 44, wherein the plurality of micromirrors are formed by coating the plurality of mirror members with a metallic film.

46. The optical switch of claim 44, wherein the plate member, the plurality of stop members, and the plurality of mirror members are comprised of silicon.

47. The optical switch of claim 25, wherein the micromechanical. actuator, the plurality of micromirrors, the plurality of first waveguides, and the plurality of second waveguides form an N x M non-blocking cross-bar switch, wherein N is the number of first waveguides, M is the number of second wave guides and N x M is the number of micromirrors.

48. The optical switch of claim 25, further comprising an integrated electronic control system coupled to the micromechanical actuator, wherein the integrated electronic control system selectively actuates each of the plurality of actuating members to position a corresponding micromirror into or out of a corresponding trench in accordance with a predetermined command.

49. The optical switch of claim 25, wherein the switch membrane comprises:
a plurality of platforms, each platform integrally formed with a corresponding one of the plurality of micromirrors; and
a plurality of micro-spring structures connecting each of the plurality of platforms to the switch member.

50. A method of making an optical device for directing a light signal, the method comprising the steps of:
providing a substrate having a first surface and a second surface;
forming at least one mirror in the second surface of the substrate; and
removing excess substrate material from the second surface on either side of the at least one mirror such that the substrate is deformable between a undeformed position and a deformed position.

51. The method of claim 50, wherein the step of providing includes providing a <110> silicon wafer.

52. The method of claim 50, wherein the step of providing includes providing a <110> SOI wafer.

53. The method of claim 50, wherein the step of forming further comprises the steps of:
transferring a pattern of the at least one mirror onto the second surface using a photolithographic technique; and
etching the second surface to thereby form at least one mirror structure; and gold coating the at least one mirror structure to form the at least one mirror.

54. The method of claim 53, wherein the step of etching further comprises the steps of:
anisotropically etching the second surface to form the at least one mirror structure; applying a coating of photoresist over the at least one mirror structure;
removing a first portion of the photoresist coating, whereby a second portion of photoresist contiguous with the at least one mirror structure remains on the second surface; and
wet etching the second surface to remove the second portion to thereby form a stop member integral with the mirror structure, whereby all of the substrate not covered by the second portion is removed, exposing the metallic layer deposited on the first surface.

55. The method of claim 50, further comprising the step of forming a membrane from the first surface by depositing a material on the first surface, wherein the material is selected from a group containing silica, polymer, aluminum, gold, nickel, or copper.

56. The method of claim 50, wherein the step of removing includes the step of forming a micro-suspension system in the substrate.

57. The method of claim 56, wherein the step of forming the micro-suspension system includes:
forming at least one platform member from the substrate, whereby the at least one micromirror is suspended from the platform member; and
forming at least micro-spring member from the substrate, the at least one micro-spring member coupling the at least one platform member to the substrate, whereby the at least one micromirror is flexibly suspended over a switching cross-point.

58. The method of claim 56, wherein the step of forming the micro-suspension system includes:
forming at least one first flexible beam from the substrate, the at least one. flexible beam extending in a first direction;
forming at least one second flexible beam from the substrate, the at least one flexible beam extending in a second direction, and intersecting the at least one first flexible beam to form at least one intersection; and
forming the at least one micromirror at the at least one intersection whereby the at least one micromirror is flexibly suspended over a switching cross-point.
